# EUROPÄISCHE PATENTSCHRIFT

(11) **EP 3 369 646 B1**
(45) Veröffentlichungstag und Bekanntmachung des Hinweises auf die Patenterteilung: **07.10.2020**
(21) Anmeldenummer: 18158759.3
(22) Anmeldetag: 27.02.2018
(51) Int. Cl.: B62H 3/00, B25H 1/00

(54) **ADAPTER ZUR BEFESTIGUNG EINES ZWEIRADES AN EINER AUFSTÄNDERVORRICHTUNG UND EINE VORRICHTUNG ZUM AUFSTÄNDERN EINES ZWEIRADES**
ADAPTER FOR ATTACHING A TWO-WHEELED VEHICLE TO A STAND AND A DEVICE FOR SUPPORTING A TWO-WHEELED VEHICLE
ADAPTATEUR PERMETTANT DE FIXER UN DEUX ROUES À UN DISPOSITIF DE SUSPENSION ET UN DISPOSITIF DE FIXATION D'UN DEUX ROUES

(30) Priorität: 01.03.2017 DE 102017104215
(43) Veröffentlichungstag der Anmeldung: 05.09.2018
(73) Patentinhaber: Fischer, Dietmar, 01561 Grossenhain (DE)
(72) Erfinder: Fischer, Dietmar, 01561 Grossenhain (DE)
(74) Vertreter: Häntzschel, Nadine

(56) Entgegenhaltungen:
- DE-U1-202011 104 030
- DE-U1-202012 002 077
- TW-U- M 456 958

## Beschreibung

Die Erfindung betrifft einen Adapter zur Befestigung eines Zweirades an einer Aufständervorrichtung und eine Vorrichtung zum Aufständern eines Zweirades.

Beispielsweise zur Wartung, Inspektion oder Reparatur von Zweirädern, insbesondere Motorrädern oder Motorrollern, wie auch zum Reifenwechsel an diesen Zweirädern ist es zumeist notwendig, das betreffende Zweirad aufzuständern, d. h. schwebend aufzunehmen und zu halten, um an die entsprechenden Fahrzeugteile gelangen zu können. Eine Aufständerung des Zweirads kann auch für dessen zeitweilige Einlagerung erforderlich sein.

Aus dem Stand der Technik sind dazu verschiedene Aufständervorrichtungen bekannt (z.B. TW M 456 958 U), bei denen mittels eines Adapters das Zweirad an der Aufständervorrichtung, vorzugsweise an einer Grundplatte der Aufständervorrichtung, befestigt und ausgerichtet wird und sodann angehoben werden kann. Der Adapter verfügt über Eingriffsmittel, welche in den Rahmen, in Öffnungen des Rahmens und/oder in Hohlwellen des Zweirads eingreifen. Teilweise ist es auch vorgesehen, den Adapter zusätzlich mit Aufnahmehülsen zu bestücken, welche fest am Zweirad montiert werden und die Eingriffsmittel des Adapters aufnehmen.

Der Adapter weist üblicherweise ein Langloch auf, durch das dieser mittels einer zentralen Befestigungsschraube an der Aufständervorrichtung bzw. der Grundplatte befestigt wird und geringfügig entlang eines Langloches verstellbar ist.

Der Adapter ist zweiradspezifisch ausgebildet (wie z.B. nach DE 20 2012 002 077 U1), d. h. für jedes Zweiradmodell ist in der Regel ein separater Adapter erforderlich. Soll ein anderes Zweiradmodell aufgeständert werden, so muss der spezifische Adapter getauscht und z. B. hinsichtlich der erforderlichen Höhe und/oder der Neigung des Zweirads gegenüber der Aufständervorrichtung wieder neu eingestellt werden.

Das Aufständern erfolgt üblicherweise möglichst nahe dem Schwerpunkt des Zweirads an dessen Rahmen, um eine größtmögliche Standsicherheit des aufgeständerten Zweirads zu gewährleisten. Nach dem Stand der Technik wird die Aufständervorrichtung immer an der linken Seite des Zweirades (in Fahrtrichtung gesehen) angebaut und benutzt.

Beispielsweise offenbart die DE 202011104030 U1 einen Motorradständer, bei dem das Motorrad mittels einer Bolzenaufnahmeplatte mit zwei Aufnahmebolzen am Motorradständer befestigt wird und durch einen an einem Schieber des Motorradständers vorgesehenen Hebel mit Gewindestange in eine freischwebende Lage gebracht wird. Zur Befestigung und Winkeleinstellung der Bolzenaufnahmeplatte am Motorradständer weist diese ein Langloch für den Durchgang einer Sechskantschraube mit Unterlegscheibe auf, welche in eines der Löcher der Gewindeplatte des Motorradständers eingreift. Die Gewindeplatte kann bis zu acht Löcher aufweisen, um die Verschraubung verschiedener Bolzenaufnahmeplatten wahlweise an horizontal bzw. vertikal geringfügig versetzten Positionen zu ermöglichen.

Allerdings ist die Drehstellung der Bolzenaufnahmeplatte gegenüber der Gewindeplatte bei dieser Ausführung nicht sicher gewährleistet, da der Reibschluss der zentralen Befestigungsschraube allein nicht die Gegenkraft für das am Zweirad wirkende Drehmoment aufbringen kann.

Weiterhin ist aus der DE 202013006490 U1 ein transportabler Montageständer für Zweiräder bekannt, der eine zentrale Säule und ein Bodenteil aufweist. Die zentrale Säule umfasst ein Innenrohr und ein höhenverstellbares Außenrohr, an dem ein Motorradadapter befestigt ist.

Der Motorradadapter ist mittels einer Einstellvorrichtung in der Neigung verstellbar, um das Motorrad in die waagerechte Position zu bringen. Dazu weist die Einstellvorrichtung eine Schraube auf, die in einer Halterung des Motorradadapters drehbar lagert und sich gegen das Außenrohr abstützt. Durch die Drehung der Schraube ist der Motorradadapter um einen unteren Befestigungspunkt am Außenrohr drehbar, wobei die möglichen Drehstellungen durch ein horizontal erstrecktes Langloch eines oberen Befestigungspunkts des Motorradadapters am Außenrohr vorgegeben sind. Zusätzlich weist der Motorradadapter drehbare Aufnahmebolzen mit Schnellverschluss für die drehflexible Aufnahme des Motorrads auf, um das montierte Zweirad in Zusammenspiel mit der Einstellvorrichtung in die Waagerechte zu bringen.

Auch diese Einstellvorrichtungen der Neigung des aufgeständerten Zweirads sind konstruktiv sehr aufwändig und schwierig zu handhaben. Die Einstellmöglichkeiten, wie Einstelllänge und - winkel, sind sehr eng begrenzt. Horizontal ist die Position des Motorradadapters gegenüber dem Außenrohr nicht veränderbar. Ferner ist der Motorradadapter bei dieser Ausführung nicht zuverlässig gegen ein Verdrehen in Richtung der Halterung der Schraube gesichert.

Bei den aus dem Stand der Technik bekannten Aufständervorrichtungen kann zudem insbesondere der eingestellte Neigungswinkel des Motorradadapters nicht gespeichert oder markiert werden. Die Einstellungen müssen für den jeweiligen Motorradadapter immer wieder neu vorgenommen werden.

Den aus dem Stand der Technik bekannten Aufständervorrichtungen ist außerdem gemein, dass diese nur linksseitig am Zweirad (in Fahrtrichtung) verwendet werden können, da die Adapter nicht in einem entsprechenden Neigungswinkel für die Montage von rechts umstellbar sind oder nur für eine Befestigung von links ausgebildet und anwendbar sind.

Der Erfindung liegt daher die Aufgabe zugrunde, einen Adapter und eine Vorrichtung zum Aufständern eines Zweirads bereitzustellen, welche die genannten Nachteile des Stands der Technik beseitigen und die ein Aufständern des Zweirades einfacher, sicherer und flexibler ermöglichen, um die Wartungs- und Montagearbeiten an einem aufgeständerten Zweirad komfortabler ausführen zu können.

Beispielsweise sollen der Adapter bzw. die Aufständervorrichtung sowohl von links als auch von rechts an ein Zweirad montierbar sein, wobei ein Umbau schnell und einfach erfolgen soll.

Zudem soll die Befestigung des Adapters und die Anordnung der Aufständervorrichtung so variabel erfolgen können, dass eine größtmögliche Zugänglichkeit zum Zweirad gewährleistet wird.

Die Aufgabe wird erfindungsgemäß durch einen Adapter zur Befestigung eines Zweirades an einer Aufständervorrichtung mit den Merkmalen des Patentanspruches 1 und eine Vorrichtung zum Aufständern eines Zweirades mit den Merkmalen des Patentanspruchs 7 gelöst.

Ausgestaltungen und Weiterbildungen der Erfindung gehen aus den jeweils abhängigen Patentansprüchen sowie der nachfolgenden Beschreibung und den zugehörigen Zeichnungen hervor.

Ein wesentlicher Aspekt der Erfindung beruht auf der Erkenntnis, dass die Einstellmöglichkeiten zwischen Adapter und Aufständervorrichtung (Vorrichtung zum Aufständern eines Zweirads) deutlich erweitert werden können, indem der Neigungswinkel des Adapters weitestgehend unabhängig von der Aufständervorrichtung eingestellt wird.

Es wird ein Adapter zur Befestigung eines Zweirades an einer Aufständervorrichtung vorgeschlagen, der eine Adapterplatte und ein Halteteil aufweist.

Die Adapterplatte weist neben einer oder mehrerer Einrichtungen zur Aufnahme des Zweirads eine - vorzugsweise zentral angeordnete - Durchführung für die Aufnahme eines Halteteils auf.

Das Halteteil ist zentrisch in der Durchführung anordenbar, wobei die Durchführung das Halteteil koaxial umgibt und eine Außenkontur des Halteteils geometrisch passend mit einer Kontur der Durchführung korrespondiert, bzw. ausgebildet ist.

Die Adapterplatte kann mittels der zentralen, das Halteteil koaxial einfassenden Durchführung eine änderbare Drehstellung in Bezug zum Halteteil einnehmen, was es ermöglicht, den Neigungswinkel (Drehwinkel) der Adapterplatte gegenüber dem Halteteil und folglich gegenüber der Aufständervorrichtung variabel einzustellen, wobei grundsätzlich alle Winkelstellungen der Adapterplatte zwischen 0° und 360° möglich sind.

Für eine stufige Einstellung des Drehwinkels ist es denkbar, dass die Außenkontur des Halteteils und entsprechend auch die Kontur der Durchführung einen formschlüssigen, in Umfangsrichtung veränderlich geformten Querschnitt aufweisen, wie beispielsweise einen n-eckigen Querschnitt oder eine oder mehrere über den Umfang verteilte Nut-Feder-Ausbildung(en) oder eine umlaufende Verzahnung, so dass die Adapterplatte in vorzugsweise regelmäßigen Schritten drehgestellt werden kann.

Uniforme und regelmäßig über den Umfang verteilte Querschnittsausformungen ermöglichen zudem eine leichte Reproduzierbarkeit der stufigen Drehstellungen (Neigungswinkel) der Adapterplatte.

Zusätzlich wird ein umfangsgerichteter (tangentialer) Formschluss zwischen Halteteil und Adapterplatte erzeugt, der eine hohe Verdrehsicherung der Adapterplatte gegenüber dem Halteteil gewährleistet, welche besonders bei der Aufständerung von schweren Zweirädern von Bedeutung sein kann.

Die Außenkontur des Halteteils und die Kontur der Durchführung der Adapterplatte können alternativ einen formschlüssigen, kreisrunden Querschnitt aufweisen. Dadurch ist die Adapterplatte um das Halteteil stufenlos drehbar und es lassen sich alle Winkel im Bereich von 0 ° bis 360 ° einstellen.

Erfindungsgemäß weist das Halteteil im Weiteren einen Durchgang für ein Befestigungsmittel, z. B. einen Gewindebolzen, einen Gewindestab, ein Gewindestück oder eine Gewindestange, auf, das zur unmittelbaren Befestigung des Halteteils und nachfolgend der Befestigung des gesamten Adapters an einer geeigneten Gegenfläche der Aufständervorrichtung dient.

Der Durchgang kann beispielsweise mittig im Halteteil angeordnet sein, um eine zentrische Befestigung des Halteteils an der Aufständervorrichtung zu ermöglichen. Durch diese zentrische Befestigung des Halteteils an der Aufständervorrichtung kann auch das Halteteil selbst in beliebiger Drehstellung an der Aufständervorrichtung fixiert werden.

Es ist erfindungsgemäß vorgesehen, dass die Adapterplatte mittelbar an der Aufständervorrichtung befestigt wird, nämlich mittels des unmittelbar zu befestigenden Halteteils, welches in der Durchführung der Adapterplatte anordenbar ist. Die Adapterplatte ist durch eine geeignete geometrische Ausbildung des Halteteils und der Durchführung der Adapterplatte in axialer Richtung so an der Aufständervorrichtung gehalten, dass sie im gelockerten Zustand des Halteteils entsprechend der tangential ausgebildeten Formgebung stufenlos drehbar oder in Drehstufen stellbar ist ohne von der Aufständervorrichtung abzufallen und im befestigten Zustand des Halteteils in einer bestimmten Drehstellung sicher an der Aufständervorrichtung fixierbar ist.

Zur axialen Fixierung der Adapterplatte kann das Halteteil beispielsweise einen die Durchführung der Adapterplatte einfassenden Flanschbund aufweisen.

Auch ist zur axialen Fixierung der Adapterplatte eine Ausformung eines Absatzes / Anschlages am Halteteil denkbar, welche in oder an einer korrespondierenden Ausnehmung der Durchführung lagerbar ist.

Das Befestigungsmittel übt eine Anzugskraft auf das Halteteil aus, die über eine derartige Geometrie des Halteteils mittelbar auf die Adapterplatte wirkt, und beide Teile an eine Gegenfläche der Aufständervorrichtung anpresst. Hierdurch wird im Wesentlichen eine kraftschlüssige Verbindung zwischen dem gesamten Adapter und der Aufständervorrichtung erzeugt.

Die Adapterplatte ist in einem leicht angezogenen Zustand des Befestigungsmittels in eine wählbare Drehstellung gegenüber dem Halteteil drehbar bzw. stellbar und in einem fest angezogenen Zustand des Befestigungsmittels fest an der Aufständervorrichtung fixiert.

Die Höhen- und Breitenverstellung (Verstellung in Richtung der Bauhöhe des Zweirads und in Richtung der Zweiradlängsachse) kann durch eine entsprechende Befestigung des Halteteils an der Aufständervorrichtung, insbesondere an einer Grundplatte der Aufständervorrichtung, in üblicher Weise oder mittels einer im Weiteren beschriebenen Weiterentwicklung der Aufständervorrichtung erfolgen.

Die erfindungsgemäße Ausführung des Adapters ermöglicht eine leichte und funktionssichere Einstellung des Neigungswinkels der Adapterplatte und damit der Neigung der Längsachse eines aufgenommenen und aufgeständerten Zweirads in vertikaler Richtung.

Das Halteteil dient in komprimierter Funktion als zentrales Befestigungsorgan zur Befestigung des Adapters an der Aufständervorrichtung und gleichzeitig als Drehstelleinrichtung und Verdrehsicherung für die Adapterplatte, was den konstruktiven Aufwand zur Einstellung der Neigung des aufgeständerten Zweirads erheblich mindert und den Einstellvorgang deutlich vereinfacht und erleichtert.

Die erfindungsgemäße Ausführung ermöglicht eine bessere Zugänglichkeit zum Zweirad, weil zum einen auf gesondert ausgebildete, störend ausladende Einstelleinrichtungen verzichtet werden kann und zum anderen das Spektrum der möglichen Neigungseinstellungen der Adapterplatte und damit der möglichen Neigungen des aufgeständerten Zweirads wesentlich erweitert ist.

Hierdurch ermöglicht sich zudem eine Montage der Aufständervorrichtung sowohl linksseitig als auch rechtsseitig des Zweirades, da alle Einstellungen des erfindungsgemäßen Adapters auch spiegelsinnig vorgenommen werden können.

Für eine sowohl linksseitige als auch rechtsseitige Montage der Aufständervorrichtung mit der notwendigen Standsicherheit kann dessen Fußteil bei Bedarf entsprechend flexibel ausgebildet sein.

Die Adapterplatte kann beispielsweise in Form eines flachen Quaders mit rechteckiger oder quadratischer Grundfläche und mit abgerundeten oder abgeschrägten Ecken ausgebildet sein. Die Adapterplatte kann beispielsweise aus Flachstahl bestehen. Es ist jedoch auch jede andere geometrische und werkstofftechnische Ausführung denkbar, solange sie die erforderliche mechanische Festigkeit gewährleisten kann und für die Montage sowohl am Zweirad als auch an einer Aufständervorrichtung geeignet ist.

Die Adapterplatte weist eine oder mehrere Einrichtungen zur Aufnahme des Zweirads auf. Dabei kann es sich beispielsweise um zapfen- oder bolzenförmige Eingriffsmittel und/oder platten- und/oder gabel- und/oder klemmenartige Angriffseinrichtungen handeln, die mit oder ohne Aufnahmehülsen in Öffnungen des Rahmens des Zweirades eingreifen und/oder unter den Rahmen des Zweirads greifen können.

Bei Bedarf können die Einrichtungen zur Aufnahme des Zweirads bei links- oder rechtsseitiger Montage variiert und/oder durch Aufnahmemittel ergänzt werden.

In einer vorteilhaften Weiterbildung der Ausführungen zur mittelbaren Fixierung der Adapterplatte an der Aufständervorrichtung mittels des Halteteils sind eine Innenfläche der Durchführung der Adapterplatte und eine Mantelfläche des Halteteils zueinander konisch verlaufend ausgebildet.

Mittels der konischen Ausführung durch beispielsweise eine trichterförmige Durchführung und eine hierzu passende kegelstumpfartigen Ausführung des Halteteils kann die Adapterplatte in einem gelockerten Befestigungszustand des Halteteils in axialer Richtung an der Aufständervorrichtung gehalten werden, ohne dass diese nach vorn abfällt, wobei eine besonders leichte, komfortable Drehführung der Adapterplatte gegenüber dem Halteteil ermöglicht wird.

Die konische Ausbildung des Halteteils und der Durchführung gewährleisten zudem eine genau zentrische Justierung der Adapterplatte im fixierten Befestigungszustand.

Die konische Ausbildung des Halteteils und der Durchführung lässt sich konstruktiv leichter herstellen und gewährleistet einen dauerhaft sicheren Sitz durch eine geringe Verschleißanfälligkeit.

In weiteren vorteilhaften Weiterbildungen der Ausführungen zur mittelbaren Fixierung der Adapterplatte mittels des Halteteils kann mit geeigneten Mitteln eine Klemm- oder Presspassung der geometrisch korrespondierenden Querschnitte des Halteteils und der Durchführung der Adapterplatte bewirkt werden.

Beispielsweise kann hierfür ein in axialer Richtung veränderliches Umfangsmaß der Mantelfläche des Halteteils, welches eine geringfügige Querschnittserweiterung der Außenkontur des Halteteils hervorruft und/oder ein in axialer Richtung veränderliches Umfangsmaß der Innenfläche der Durchführung der Adapterplatte, das eine geringfügige Querschnittsverengung der Innenkontur der Durchführung hervorruft, vorgesehen sein.

Hierdurch kann ein Formschluss insbesondere zwischen einem Halteteil mit z. B. im Wesentlichen kreisrundem Querschnitt und einer Adapterplatte mit korrespondierendem kreisrundem Durchgangsquerschnitt durch gegeneinander klemmende Querschnitte der Konturen des Halteteils und der Durchführung der Adapterplatte zusätzlich kraftschlüssig gesichert werden.

In einer weiteren möglichen Ausgestaltung der erfindungsgemäßen Klemm- oder Presspassung ist eine geschlitzte Ausführung des Halteteils mit einem von dessen Mantelfläche ausgehenden, radial gerichtete Schlitz bzw. eine geschlitzte Ausführung der Adapterplatte mit einem von der Innenfläche der Durchführung ausgehenden, radial gerichteten Schlitz denkbar, wobei der Schlitz des Halteteils durch eine Spreizfeder oder eine Spreizmutter aufweitbar ist bzw. der Schlitz in der Adapterplatte durch eine Spannfeder oder Spannmutter verjüngbar ist.

In einer besonders vorteilhaften Ausführung ist vorzugsweise eine Übermaßpassung zwischen Halteteil und Adapterplatte vorgesehen, wobei der Umfang der Mantelfläche des Halteteils zumindest teilweise ein Übermaß gegenüber dem Umfang der Innenfläche der Durchführung aufweist.

Das Übermaß des Halteteils erzeugt bei der Befestigung des Adapters an der Aufständervorrichtung eine Presspassung zwischen der Mantelfläche des Halteteils und der Innenfläche der Durchführung, welche ein besonders großes Reibungsmoment des Halteteils gegenüber der Adapterplatte bewirkt. Mit diesen sehr einfachen Mitteln zur kraftschlüssigen Sicherung des Formschlusses zwischen dem Halteteil und der Adapterplatte wird zudem eine sehr belastbare verdrehfeste Fixierung der Adapterplatte gegenüber dem an der Aufständervorrichtung bzw. deren Grundplatte befestigtem Halteteil und damit gegenüber der Aufständervorrichtung erreicht, die besonders bei der Aufständerung von schweren Zweirädern von Bedeutung ist.

Zusätzlich oder alternativ zur vorstehend beschriebenen kraftschlüssigen Verdrehsicherung der Adapterplatte gegenüber der Aufständervorrichtung kann die Aufständervorrichtung bzw. deren Grundplatte mit einer Anschlagsicherung versehen sein, welche bei Anlage/Anschlag an der in ihrer gewünschten Neigung eingestellten, fixierten Adapterplatte ein Verdrehen der Adapterplatte gegenüber der Aufständervorrichtung bzw. deren Grundplatte verhindert. Die Anschlagsicherung kann beispielsweise durch einen an der Grundplatte befestigbaren Sicherungsbolzen, welcher an einer äußeren Kontur der in der neigungseingestellten, fixierten Adapterplatte anliegt, realisiert werden.

Hierdurch können auch besonders schwere Zweiräder und/oder Zweiräder, die einen von der Drehachse des Befestigungsmittels des Adapters bzw. von der vertikalen Längsachse der Aufständervorrichtung weiter entfernten Schwerpunkt aufweisen, sicher aufgeständert und gehalten werden.

Gemäß einer weiteren Ausgestaltung weist das Halteteil zumindest ein Führungselement zur Führung an der Aufständervorrichtung auf.

Das Halteteil kann ein oder mehrere Führungselement(e), wie z. B. punktuelle Führungselemente, wie Führungsstifte oder längserstreckte Führungselemente, wie Führungsschienen, Führungsnuten oder Führungsstege oder eine Kombination der genannten Führungselemente, aufweisen, die mit Führungselementen der Aufständervorrichtung zusammenwirken können. Vorzugsweise können die längserstreckten Führungselemente Führungsstege oder Führungsnuten sein, wobei beispielsweise an einer der Aufständervorrichtung zugewandten Seite des Halteteils eine Führungsnut ausgebildet sein kann, die mit einem passgenau ausgebildeten Führungssteg der Aufständervorrichtung bzw. deren Grundplatte korrespondiert.

Somit ist das Halteteil entlang des Führungssteges bzw. der Führungsnut lagedefiniert verschiebbar.

Noch variabler und sicherer wird die Führung des Halteteils, wenn am Halteteil zwei parallel zueinander angeordnete längserstreckte Führungselemente vorhanden sind, die vorzugsweise beidseits des Durchgangs angeordnet sind und die mit mehreren entsprechend beabstandeten, parallel verlaufenden, längserstreckten Führungselementen der Aufständervorrichtung bzw. deren Grundplatte korrespondieren können.

Die längserstreckten Führungselemente der Aufständervorrichtung bzw. der Grundplatte können in senkrechter und/oder horizontaler und/oder diagonaler Richtung angeordnet sein.

Das Halteteil kann mittels des Führungselementes bzw. der Führungselemente nicht nur in definierten Richtungen bzw. Stellungen an der Aufständervorrichtung geführt bzw. positioniert werden sondern auch verdrehfest an dieser angeordnet werden.

Gemäß einer Ausgestaltung kann der Durchgang durch das Halteteil als ein Langloch ausgebildet sein. Dies erschließt weitere Verstellmöglichkeiten des Adapters in Bezug auf die Aufständervorrichtung, da in Richtung des Langlochs eine Verschiebung des Halteteils mit der Adapterplatte ermöglicht wird.

Vorzugsweise kann das Langloch zumindest die Länge wie der größte, äußere Abstand der Ränder zweier benachbarter Öffnungen in der Aufständervorrichtung bzw. deren Grundplatte aufweisen, so dass auch eine Verschiebung des Adapters bzw. eine Versetzen des Befestigungsmittels zwischen diesen Öffnungen leicht ermöglicht werden kann.

Gemäß einer weiteren Ausgestaltung ist vorgesehen, dass eine Drehstellung der Adapterplatte gegenüber dem Halteteil mittels wenigstens jeweils einer an oder auf dem Halteteil und an oder auf der Adapterplatte angebrachten Markierung definierbar ist.

Dazu können beispielsweise ein oder mehrere Markierung-Striche auf dem Halteteil und der Adapterplatte, vorzugsweise am umlaufenden Rand des Halteteils und am Rand der Durchführung der Adapterplatte, an- oder aufgebracht, z. B. eingefräst, sein. Beispielsweise kann eine umlaufende Skalierung, wie z. B. eine 360°-Gradeinteilung, auf dem Halteteil oder der Adapterplatte angebracht sein, während das jeweilige Gegenstück (Adapterplatte oder Halteteil) mindestens einen Marker aufweist.

Dies ermöglicht eine schnelle Wiedereinstellung eines bestimmten gewünschten Neigungswinkels der Adapterplatte nach Demontage und erneuter Montage des Adapters. Zudem kann bei einem Seitenwechsel der Aufständervorrichtung, z.B. von der linken auf die rechte Seite, dieselbe Neigung der Adapterplatte und damit des Zweirads sehr einfach und schnell wieder eingestellt werden, indem das Halteteil bzw. die Adapterplatte um dieselbe Anzahl an Markierungen in die entgegengesetzte Richtung - ausgehend von der Vertikalen bzw. einer 0°-Markierung - gedreht wird.

Weiterhin wird eine Vorrichtung zum Aufständern eines Zweirads (Aufständervorrichtung) vorgeschlagen, welche einen Ständer mit zumindest einem Fußteil und einem Standrohr und mindestens einen erfindungsgemäßen Adapter nach einem der Ansprüche 1 bis 6 aufweist, welcher mittels eines Befestigungsmittels lösbar mit dem Ständer verbindbar ist.

Die beanspruchte Aufständervorrichtung betrifft ein Teilesatz (Kit-of-Parts), welche einen Ständer und mindestens einen der erfindungsgemäßen Adapter nach einem der Ansprüche 1 bis 6 umfasst, welcher der Montage eines Zweirades am Ständer dient. Der Adapter kann zweiradspezifisch mit spezifischen Aufnahmeeinrichtungen für die Aufnahme jeweils eines Zweirades ausgebildet sein.

Zur Montage mehrerer verschiedener Zweiräder können verschiedene erfindungsgemäße Adapter mit entsprechend ausgebildeten Aufnahmeeinrichtungen austauschbar mit dem Ständer verbunden werden.

Es ist insbesondere vorteilhaft, wenn die verschiedenen Adapter ein identisches Halteteil aufweisen und sich lediglich in den Adapterplatten mit zweiradspezifisch ausgebildeten Aufnahmeeinrichtungen unterscheiden. Bei einem Wechsel des Zweirads kann somit dasselbe Halteteil wiederverwendet werden, wobei lediglich die Adapterplatte ausgetauscht werden muss.

Der Ständer ist eine Halteeinrichtung, die längs erstreckt sein kann und in geeigneter Weise auf einer Aufstellungsfläche aufstellbar ist oder in geeigneter Weise an einer Wandfläche befestigt werden kann. Der Ständer gewährleistet die Standsicherheit bzw. stabile Wandbefestigung der Aufständervorrichtung, damit das montierte Zweirad sicher aufgeständert werden kann.

Der Ständer kann beispielsweise ein geeignetes Fußteil oder einen geeigneten Wandhalter aufweisen, welches/welcher mit einem längserstrecktem Ständergestänge, wie einem Standrohr, verbindbar ist.

Der erfindungsgemäße Adapter ist im montierten Zustand der Aufständervorrichtung mittels eines durch den Durchgang des Halteteils führenden und in eine Öffnung des Ständers eingreifenden Befestigungsmittels (wie zum Beispiel ein Schraubbolzen) lösbar mit dem Ständer verbunden.

Das Halteteil ist, wie zuvor beschrieben, zumindest so gestaltet, dass es - angeordnet in der Durchführung der Adapterplatte - diese zugleich am Ständer hält und beim Festziehen des Befestigungsmittels zur Befestigung des Halteteils auch die Adapterplatte durch Reib- und/oder Formschluss mit dem Halteteil drehfest sichert. Zuvor wird eine gewünschte Drehstellung der Adapterplatte gegenüber dem Halteteil voreingestellt.

Bei der Befestigung werden das Halteteil und die Adapterplatte am Ständer drehfest fixiert, wobei eine voreingestellte Drehstellung der Adapterplatte gegenüber dem Halteteil und damit ein Neigungswinkel in Bezug auf die Längsachse des aufzunehmenden Zweirads festgelegt wird.

Diese Ausführung der Vorrichtung ermöglicht ein einfaches Aufständern des Zweirades mit einem nahezu beliebigen Neigungswinkel des an der Adapterplatte aufgenommenen Zweirades, was die Zugänglichkeit des aufgeständerten Zweirades bedeutend verbessert.

In einer vorteilhaften Ausführung der Aufständervorrichtung weist der Ständer ein Fußteil auf, welches mit einem Standrohr lösbar verbindbar ist.

Das Fußteil weist hierzu eine Aufnahmeeinrichtung zur Aufnahme eines Standrohres auf, wobei das Fußteil lösbar mit dem Standrohr verbindbar ist.

Das Standrohr kann als Hohl- oder Vollprofil ausgebildet sein und verschiedene Querschnitte, wie z.B. einen rechteckigen, insbesondere quadratischen, oder einen kreisförmigen Querschnitt, aufweisen.

Das Standrohr kann auf, an oder in die Aufnahmeeinrichtung des Fußteils gesteckt werden.

Der Aufnahmequerschnitt der Aufnahmeeinrichtung kann vorzugsweise formschlüssig korrespondierend zum Querschnitt des Standrohres ausgebildet sein.

Vorzugsweise ermöglicht eine geometrisch passgenaue Gestaltung der Aufnahmeeinrichtung und des Standrohres eine spielfreie Verbindung des Standrohres mit dem Fußteil.

Das Standrohr kann in, auf oder an der Aufnahmeeinrichtung des Fußteils mit einem arretierbaren Federriegel, Passstift, Bolzen oder einer anderweitigen Sicherungseinrichtung gesichert sein.

Als Fußteil kann beispielsweise ein mobiles Teil mit Dreifuß oder Bodenplatte zur Aufstellung des Ständers auf einen ebenen Untergrund vorgesehen sein. Das mobile Teil kann mit Gelenkrollen zum Rangieren des Ständers ausgestattet sein. Das Fußteil kann im Weiteren als ein stationäres Teil mit z. B. einer durch Verschrauben oder durch Einbetonieren am oder im Untergrund befestigten Einbauhülse ausgebildet sein.

In einer weiteren vorteilhaften Ausführung weist der Ständer ein Standrohr mit einem gegenüber dem Standrohr verschiebbares Schiebeteil auf, mit welchem der Adapter lösbar verbindbar ist.

Das Schiebeteil kann als Rohr, Profil oder Stab ausgebildet sein, welches entsprechend seiner geometrischen Ausbildung im, am oder um das Standrohr verschiebbar angeordnet sein kann.

Vorzugsweise weist das Schiebeteil und/oder das Standrohr eine glatte Oberfläche oder eine glatte Beschichtung, wie Teflon, auf, was die Gleitfähigkeit und damit die Verschiebbarkeit des Schiebeteils gegenüber dem Standrohr verbessert.

Diese Verschiebbarkeit des Schiebeteils und damit des am Schiebeteil befestigten Adapters ermöglicht neben der freizügigen Neigungseinstellung eine Höhenverstellung des an der Adapterplatte aufgenommenen Zweirades in Bezug zum Ständer, um die Wartungs- und Montagearbeiten am aufgeständerten Zweirad des Weiteren zu erleichtern.

Nach einer weiteren vorteilhaften Ausgestaltung ist das Fußteil und/oder das Schiebeteil in einem Winkel um die Längsachse des Standrohrs versetzt anordenbar.

Das Fußteil bzw. das Schiebeteil kann hierzu wie vorausgehend beschrieben vorzugsweise lösbar mit dem Standrohr verbunden sein.

Fußteil und/oder Schiebeteil können so in einem bestimmten Winkel zum Anwender bzw. zum aufzuständernden Zweirad hin ausgerichtet werden.

Beispielsweise kann das Schiebeteil um 90° oder um 180° in Bezug auf eine Ausgangsstellung am Ständer um die Längsachse des Standrohrs versetzt anordenbar sein. Ebenso kann auch das Fußteil um 90° oder um 180° in Bezug auf eine Ausgangsstellung am Ständer um die Längsachse des Standrohrs versetzt anordenbar sein.

Dies ermöglicht eine wechselseitige Verwendung des Ständers links oder rechts des Zweirads, indem die Standfestigkeit der Aufständervorrichtung an den veränderten Schwerpunkt des linksseitig bzw. rechtsseitig aufgeständerten Zweirades durch eine entsprechend versetzte Anordnung des Schiebe- und/oder Fußteils angepasst wird.

Gemäß einer weiteren Ausgestaltungsform weist der Ständer eine Hubeinrichtung zur Höhenverstellung des Schiebeteils auf, wobei die Hubeinrichtung in einem Winkel um die Längsachse des Standrohrs versetzt anordenbar ist.

Somit kann auch die Position und Ausrichtung der Hubeinrichtung des Schiebteils an die wechselseitige Verwendung des Ständers links oder rechts des Zweirads angepasst werden. Die Hubeinrichtung kann immer so versetzt werden, dass bei jeder Verwendungsweise des Ständers - ob rechts oder links - die Bedienelemente der Hubeinrichtung nicht die Wartungs- und Montagearbeiten am Zweirad behindern.

In einer bevorzugten Ausführungsform ist am Ständer, vorzugsweise am Schiebeteil des Ständers, eine Grundplatte vorgesehen, die mehrere Öffnungen für die Aufnahme des Befestigungsmittels aufweist.

Am Ständer, insbesondere am Schiebeteil, kann eine Grundplatte zur Aufnahme des Adapters vorgesehen sein, die mehrere Öffnungen für die wahlweise Befestigung des Befestigungsmittels des Adapters aufweist. Die Öffnungen können über ein Innengewinde verfügen, in das ein durch den Durchgang des Halteteils führendes Befestigungsmittel mit Außengewinde (z.B. Schraubbolzen) eingreift. Der Adapter kann hierdurch lösbar und wahlweise mit einer der Öffnungen der Grundplatte verbunden werden.

Mit dieser Ausführung wird eine flexible Befestigung des erfindungsgemäßen Adapters an verschiedenen Positionen der Grundplatte und damit eine weitere variable Lageverschiebbarkeit des Adapters in Bezug auf den Ständer ermöglicht, um die Position des Adapters am Ständer besser an die spezifische konstruktive Gestaltung jedes Zweirades anzupassen.

Die Grundplatte kann beispielsweise in Form eines flachen Quaders mit rechteckiger oder quadratischer Grundfläche und abgerundeten oder abgeschrägten Ecken ausgebildet sein. Die Grundplatte kann beispielsweise aus Flachstahl bestehen. Es ist jedoch auch jede andere geometrische und werkstofftechnische Ausführung denkbar, solange sie die erforderliche mechanische Festigkeit zur Aufnahme des Adapters mit dem anhängenden Zweirad gewährleisten kann und hinsichtlich ihrer Gesamtgröße für eine Verwendung am Ständer geeignet ist.

Die Öffnungen der Grundplatte können vorzugsweise regelmäßig verteilt angeordnet sein.

Vorzugsweise können die benachbarten Öffnungen in gleichem Abstand zueinander angeordnet sein. Das gestaltet einerseits die Versatzmöglichkeit des Adapters und insbesondere die mögliche Zuordnung des Durchgangs des Halteteils zu den vorhandenen Öffnungen der Grundplatte systematischer. Ist des Weiteren der Durchgang durch das Halteteil als ein Langloch ausgebildet, kann die Länge des Langloches auf den einheitlichen Abstand der Öffnungen abgestimmt sein, so dass das Versetzen des Adapters zwischen diesen Öffnungen sehr flexibel und leicht gehandhabt werden kann.

Insbesondere können mittels der Überbrückung zweier Öffnungen der Grundplatte durch das Langloch im Durchgang des Halteteils auch sämtliche Stellungen des Adapters zwischen zwei Öffnungen der Grundplatte erreicht werden. Dies ermöglicht eine sehr genaue Feinjustierung der Positionierung des Adapters an der Grundplatte zu Gunsten einer komfortablen Zugänglichkeit eines jeden aufgeständerten Zweirades mit seinen spezifischen baulichen Gegebenheiten. Z.B. kann das Zweirad gegenüber der Aufständervorrichtung hierdurch nahezu millimetergenau ausgerichtet werden, was insbesondere bei Wartungs- und Montagearbeiten in der Nähe von Verkleidungsteilen, Fußrastanlagen und Motorteilen von Bedeutung sein kann.

Gemäß einer weiteren Ausgestaltungsform können die Öffnungen der Grundplatte zueinander rotationssymmetrisch und/oder achssymmetrisch, z. B. achsensymmetrisch in Bezug auf die Mittenachsen der Grundplatte und /oder achssymmetrisch in Bezug auf eine Längsachse des Ständers, angeordnet sein.

Bei einer solchen symmetrischen Anordnung der Öffnungen in Bezug zu den Mittenachsen (Längs- und Querachse) der Grundplatte und in Bezug zur vertikalen Längsachse des Ständers ist die Grundplatte besonders gut für die spiegelseitige Verwendung des Adapters und des Ständer auch für die rechte Seite des Zweirades geeignet, da hierbei die Abstände der Öffnungen von der Längsachse, um die der Ständer bei der spiegelseitigen Verwendung gedreht wird, identisch sind und somit die Einstellungen für die Montage an der linken Seite des Zweirades leicht für die rechte Seite des Zweirades und umgekehrt wieder gefunden werden können. Diese spiegelseitigen Einstellungen können unabhängig von der Einstellung des Neigungswinkels der Adapterplatte vorgenommen werden.

Weiterhin weist die Grundplatte vorteilhafter Weise zumindest ein Führungselement zur Führung des Adapters, vorzugsweise zur Führung des Halteteils, auf.

Wie vorstehend zum Adapter beschrieben, kann das Führungselement aus z.B. einen oder mehreren Führungsnuten, Führungsstegen oder Führungsstiften oder eine Kombination der genannten Führungselemente ausgebildet sein.

Vorzugsweise sind mehrere längserstreckte Führungselemente vorgesehen, die parallel zueinander und in demselben Abstand zueinander verlaufend angeordnet sind.

Die Ausgestaltung mit gleich gerichteten und beabstandeten längserstreckten Führungselemente ermöglicht einerseits eine systematisch Anordnung und Führung des Halterteils und damit des Adapters an der Grundplatte und andererseits bei Verwendung entsprechender korrespondierender Doppel-Führungselemente am Halteteil eine besonders sichere Führung des Adapters.

Dieses Führungselement oder diese Führungselemente können beispielsweise mit der Kontur des Adapters zusammenwirken, um diesen definiert an der Grundplatte zu platzieren oder zu verschieben.

Analog wie vorstehend zum Adapter beschrieben, kann das/die Führungselement(e) der Grundplatte z.B. punktuell als Führungsstift oder -loch oder längserstreckt, wie z.B. als Führungsschiene ausgebildet sein.

Vorzugsweise können das/die Führungselement(e) der Grundplatte mit einem oder mehreren Führungselementen des Halteteils zusammenwirken, in dem sie korrespondierend zu dem/den Führungselement (en) des Halteteils ausgebildet und angeordnet sind.

Beispielsweise können diese Führungselemente formschlüssig und abstandsgerecht zu den korrespondierenden Führungselementen des Halteteils ausgebildet sein. Somit kann der erfindungsgemäße Adapter wahlweise in verschiedene, definierte Positionen in Bezug zur Grundplatte versetzt oder verschoben werden.

Sind mehrere längserstreckte Führungselemente der Grundplatte vorgesehen, die parallel zueinander und in demselben Abstand zueinander verlaufend angeordnet sind, ermöglichen diese nicht nur eine ortsvariable, definierte Führung des Halteteils bzw. Adapters entlang der Grundplatte sondern auch eine besonders verdrehfeste Sicherung des Halteteils bzw. des Adapters im Zusammenbauzustand der Aufständervorrichtung.

Vorzugsweise sind die längserstreckten Führungselemente der Grundplatte in vertikaler und/oder horizontaler und/oder diagonaler Richtung angeordnet. Das Halteteil bzw. der Adapter kann somit gezielt in verschiedene Positionen der Grundplatte verschoben werden, beispielsweise senkrecht unter Nutzung von vertikal erstreckten Führungselementen zur Veränderung der Höhe am Ständer oder waagerecht unter Nutzung der horizontal erstreckten Führungselementen zur Veränderung der Seitwärtslage am Ständer oder diagonal unter Nutzung von diagonal erstreckten Führungselementen zur gleichzeitigen Veränderung der Höhe und seitlichen Lage.

Mit Hilfe einer Vielzahl auf der Grundplatte bereitgestellten Führungselemente und Öffnungen lässt sich eine besonders variable und reproduzierbare Positionierung des Adapters und somit eines an der erfindungsgemäßen Aufständervorrichtung aufgenommenen Zweirads realisieren, wobei der Adapter nahezu jede Position auf der Grundplatte reproduzierbar einnehmen kann.

Die Einstellung der Position des Adapters entlang der Grundplatte des Ständers kann zudem unabhängig von der Einstellung der Neigung der Adapterplatte gegenüber der Grundplatte erfolgen, was eine sehr flexible und komfortable Handhabung ermöglicht. Beispielsweise kann zunächst die Neigung der Adapterplatte gegenüber dem Halteteil (für die Einstellung der Neigung der Längsachse des Zweirads gegenüber dem Ständer) eingestellt werden, bevor die genaue Positionierung des Adapters in Bezug auf die lineare horizontale bzw. vertikale Ausrichtung an der Grundplatte der Aufständervorrichtung (für die Einstellung der Seitwärtslage bzw. der Höhe des Zweirads am Ständer) vorgenommen wird und umgekehrt.

Vorzugsweise sind die längserstreckten Führungselemente der Grundplatte als Führungsstege oder Führungsnuten ausgebildet. Sind die Führungsnuten bzw. Führungsstege der Grundplatte korrespondierend mit dem/den als Führungssteg(e) bzw. Führungsnut (en) ausgebildeten Führungselement(en) des Halteteils ausgebildet und angeordnet, wird eine besonders sichere und genaue Führung und Fixierung des Halteteils an der Grundplatte erzielt.

Für eine wechselseitige Verwendung der Aufständervorrichtung am Zweirad wird die Adapterplatte zunächst für den Anbau des Ständers z.B. links des Zweirades voreingestellt und die Adapterplatte mit dem Halteteil auf der Grundplatte platziert und montiert. Die Position der benutzten Öffnung in der Grundplatte, die Position des Befestigungsmittels innerhalb des Langlochs sowie die Stellung (Neigungswinkel)der Adapterplatte gegenüber dem Halteteil, z.B. mittels einer entsprechenden Markierung an der Adapterplatte und einer umlaufenden Skalierung am Halteteil mit ggf. einer Gradeinteilung, werden vermerkt. Für eine entsprechende Montage der Aufständervorrichtung an der anderen, rechten Zweiradseite wird das Halteteil gelockert oder von der Grundplatte entfernt und nach entsprechender gespiegelter Drehung der Adapterplatte gegenüber dem Halteteil wieder an der Grundplatte befestigt. Zur Einstellung des gegensinnigen Neigungswinkels der Adapterplatte gegenüber der Grundplatte ist ein negativer Winkel in entsprechend gleicher Größe gegenüber dem ursprünglich eingestellten Neigungswinkel der Adapterplatte gegenüber der Grundplatte zu wählen.

Gegebenenfalls ist zusätzlich eine spiegelverkehrte Öffnung (ursprünglich verwendete Öffnung gespiegelt an der Längsachse des Ständers) und ggf. eine entsprechende gespiegelte Stellung des Langloches des Halteteils zu wählen, um die Einstellungen des Adapters an der Grundplatte des Ständers paritätisch und ebenso genau für die Montage der Aufständervorrichtung an der anderen, rechten Fahrzeugseite zu erlangen.

Mit dem erfindungsgemäßen Adapter und der erfindungsgemäßen Vorrichtung zum Aufständern eines Zweirades können zusammenfassend insbesondere folgende wesentlichen Vorteile verwirklicht werden:
- Der Adapter wird nur durch ein einziges zentrales Befestigungsmittel befestigt und justiert, wodurch der im Stand der Technik notwendige, aufwändige und hinderliche Einstellmechanismus für die Neigungsverstellung entfällt.
- es kann nahezu jeder Neigungswinkel der Adapterplatte eingestellt werden
- der Neigungswinkel der Adapterplatte kann unabhängig von sonstigen Einstellungen, wie Höhen-und Seit-Verschiebungen eingestellt werden.
- Die Adapterplatte kann nahezu an jeder Stelle der Grundplatte positioniert oder in diese verschoben werden
- Alle Einstellungen und Positionen des Adapters sind genau definierbar und reproduzierbar; einmal getroffene Einstellungen/ Positionen sind leicht und schnell wiederauffindbar
- Die Aufständervorrichtung ist linksseitig oder rechtsseitig eines Zweirades anwendbar.
- der erfindungsgemäße fahrzeugspezifische Adapter kann für die linksseitige oder rechtsseitige Verwendung der Aufständervorrichtung eingestellt werden
- das Halteteil des Adapters kann mit verschiedenen, fahrzeugspezifisch ausgebildeten Adapterplatten kombiniert werden
- das Fußteil, das Schiebeteil und die Hubeinrichtung kann für die linksseitige oder rechtsseitige Verwendung der Aufständervorrichtung gedreht werden.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

Die erfindungsgemäßen Vorrichtungen werden nachfolgend anhand von Ausführungsbeispielen näher erläutert. Die zugehörigen Zeichnungen zeigen in einer schematischen Darstellung in
- Fig. 1: eine perspektivische Vorderansicht eines erfindungsgemäßen Adapters,
- Fig. 2a: eine perspektivische Vorderansicht eines Halteteils des Adapters nach Fig. 1,
- Fig. 2b: eine perspektivische Rückansicht des Halteteils nach Fig. 2a,
- Fig. 3: eine perspektivische Ansicht einer erfindungsgemäßen Vorrichtung zum Aufständern eines Zweirads,
- Fig. 4: eine Detailansicht der Aufständervorrichtung nach Fig. 3,
- Fig. 5a: Detailansicht nach Fig. 4 mit dem Adapter nach Fig. 1 an der Grundplatte für eine linksseitige Verwendung der Aufständervorrichtung am Zweirad,
- Fig. 5b: eine Detailansicht nach Fig. 4 mit dem Adapter nach Fig. 1 an der Grundplatte für eine rechtsseitige Verwendung der Aufständervorrichtung am Zweirad,
- Fig. 5c: eine Detailansicht nach Fig. 5b mit einer Anschlagsicherung an der Grundplatte,
- Fig. 6: eine Detail-Seitenansicht der Aufständervorrichtung nach Fig. 3 mit einem Halteteil nach Fig. 2a, 2b,
- Fig. 7: eine Seitenansicht eines mit der Aufständervorrichtung nach Fig. 3 und dem Adapter nach Fig. 1 aufgeständertem Zweirad in rechtsseitiger Verwendung.

In den im Folgenden erläuterten Beispielen wird auf die beigefügten Zeichnungen Bezug genommen, die Teil dieser sind und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, die vom Schutzumfang der vorliegenden Erfindung umfasst sind. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden" und "befestigt" zum Beschreiben sowohl einer direkten als auch einer indirekten Verbindung, eines direkten oder indirekten Anschlusses sowie einer direkten oder indirekten Kopplung verwendet. In den Figuren werden identische oder ähnliche Elemente mit identischen Bezugszeichen versehen, soweit dies zweckmäßig ist.

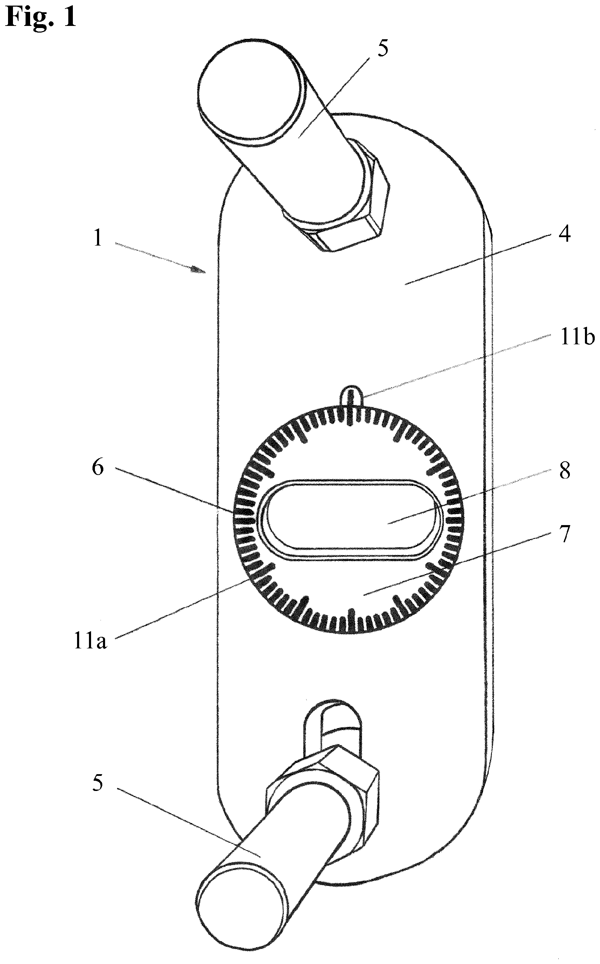

Fig. 1 zeigt einen erfindungsgemäßen Adapter 1, der über zwei zweiradspezifisch ausgebildete und angeordnete Aufnahmeeinrichtungen 5 zur Aufnahme eines Zweirads 2 (nicht dargestellt) verfügt, hier ausgebildet in Form von Bolzen, zur Befestigung eines Motorrads 2. Der Adapter 1 weist eine längliche, aus Flachstahl gefertigte Adapterplatte 4 mit abgerundeten Ecken auf, in der sich mittig angeordnet eine Durchführung 6 mit einer konisch ausgebildeten Innenfläche befindet.

In der Durchführung 6 ist ein kegelstumpfförmiges Halteteil 7 angeordnet, dessen konisch ausgebildete Mantelfläche mit der konisch ausgebildeten Innenfläche der Durchführung 6 korrespondiert, d. h. sowohl die Durchführung 6 als auch das Halteteil 7 weisen einen passgenauen, sich stetig erweiternden kreisrunden Querschnitt auf, wobei der Umfang der Mantelfläche des Halteteil 7 mit einem radialen Übermaß gegenüber dem Umfang der Innenfläche der Durchführung 6 gefertigt ist.

Mittig im konisch ausgebildeten Halteteil 7 ist ein Langloch als Durchgang 8 für ein Befestigungsmittel 9 (hier nicht dargestellt) zur Befestigung des Adapters 1 an einem Ständer 12 (hier nicht dargestellt) angeordnet.

Zudem weist das Halteteil 7 an seinem äußeren Rand Markierungen 11a in Form einer Skalierung mit 72 Teilstrichen für eine 360°-Gradeinteilung auf, die der Einstellung einer bestimmten Drehstellung der Adapterplatte 4 dient, welche hierfür am Rand der Durchführung 6 über eine Randmarke 11b verfügt und das Maß der Drehstellung gegenüber dem Halteteil 7 ersichtlich macht. Die Skalierung am äußeren Rand des Halteteils 7 ist so aufgeteilt, dass ein kurzer Teilstrich 5° und der Bereich zwischen zwei langen Teilstrichen 30° entspricht.

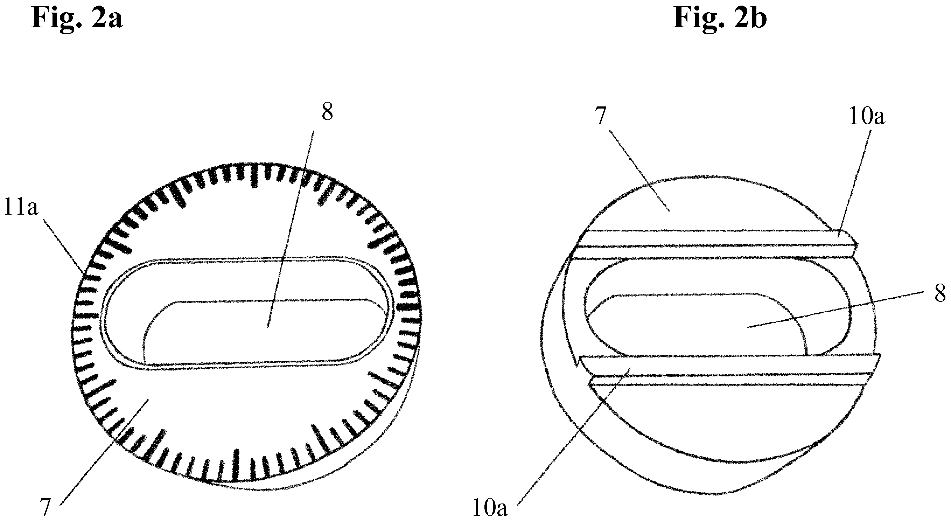

In Fig. 2a und 2b ist das Halteteil 7 als Einzelteil dargestellt, wobei Fig. 2a die Oberseite des Halteteils 7 mit den Markierungen 11a und Fig. 2b die Unterseite des Halteteils 7 zeigen.

Auf der Unterseite des Halteteils 7 sind zwei parallel zueinander verlaufende Führungsstege als Führungselemente 10a beidseits des Langloch-Durchgangs 8 und parallel zu dessen Längserstreckung angeordnet (siehe Fig. 2b).

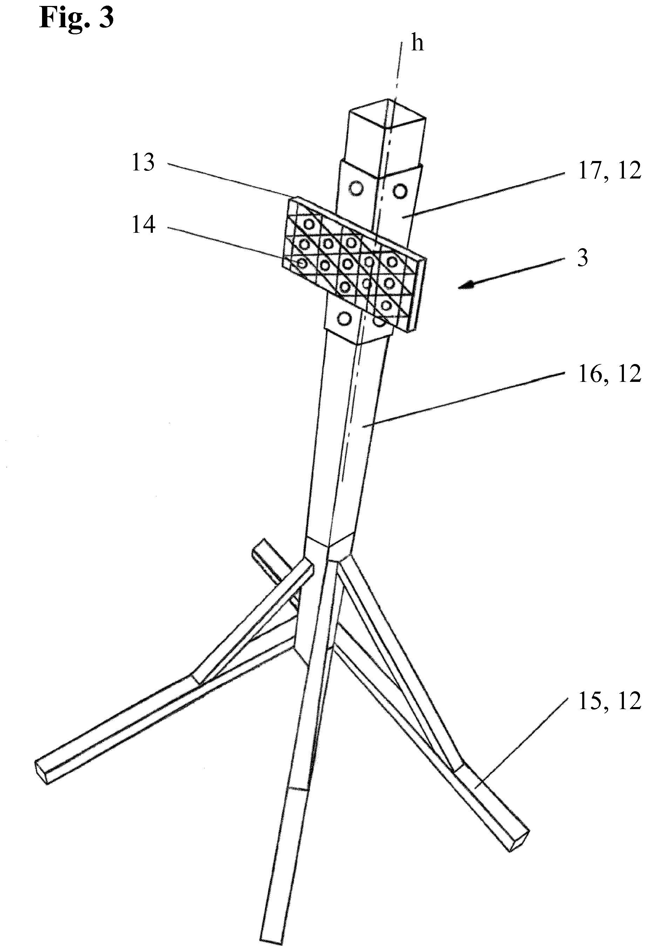

Eine beispielhafte erfindungsgemäße Vorrichtung 3 zum Aufständern eines Zweirads 2 weist nach Fig. 3 einen Ständer 12 mit einem Fußteil 15, einem Standrohr 16 und einem gegenüber dem Standrohr 16 in Richtung der vertikalen Längs-Achse h des Standrohres 16 verschiebbaren Schiebeteil 17 auf.

Das Standrohr 16 ist mittels einer lösbaren Steckverbindung mit dem Fußteil 15 verbunden. Dazu ist das quadratische Hohlprofil des Standrohres mittels einer passenden quadratischen Steckmuffe (nicht ersichtlich) auf das Fußteil 15 aufgesteckt.

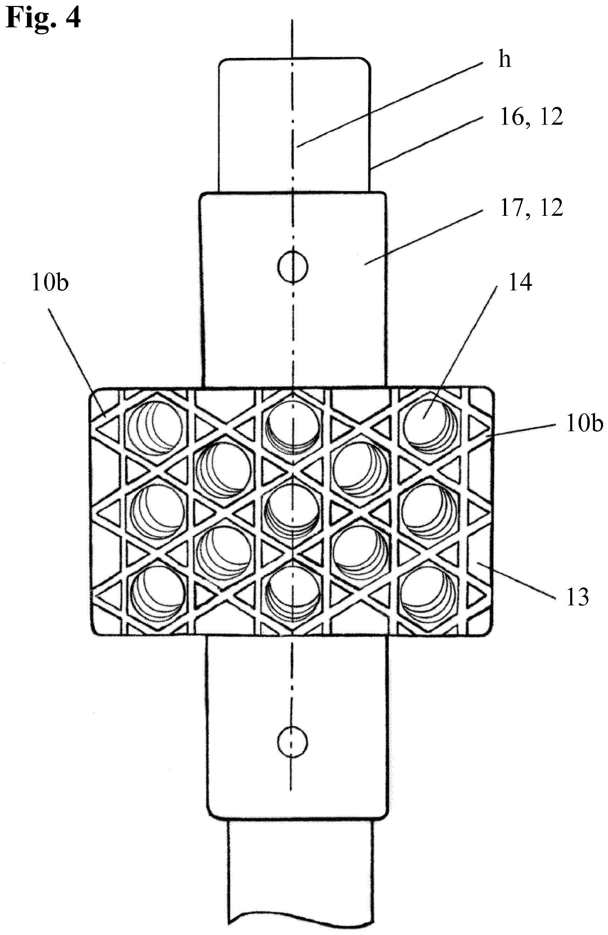

An dem Schiebeteil 17 ist eine Grundplatte 13 angebracht, die über mehrere, mit einem Innengewinde versehene Öffnungen 14 verfügt, welche der Aufnahme und lösbaren Befestigung des Adapters 1 mittels eines Befestigungsmittels 9 dienen. Die Öffnungen 14 sind so angeordnet, dass direkt benachbarte Öffnungen 14 denselben Abstand zueinander aufweisen. Insgesamt verfügt die Grundplatte 13 im Beispiel über 13 Öffnungen 14 (siehe Detail Fig. 4).

Die Grundplatte 13 ist in ihrer horizontalen Ausrichtung achssymmetrisch in Bezug auf die vertikale Längs-Achse h des Standrohres 16 angeordnet, wobei die Öffnungen 14 achsensymmetrisch in Bezug auf die Mittenachsen (Längs- und Querachse) der Grundplatte 13 und damit ebenfalls achssymmetrisch in Bezug auf die vertikale Längs-Achse h des Standrohres 16 angeordnet sind.

Die Grundplatte 13 weist weiterhin mehrere vertikal und diagonal verlaufende Führungsnuten als Führungselemente 10b derart auf, dass die vertikal bzw. diagonal gerichteten Führungsnuten jeweils parallel zueinander verlaufen und in gleichem Abstand zueinander angeordnet sind. Die Öffnungen 14 und die Führungsnuten 10b sind zudem so zueinander angeordnet, dass die Öffnungen 14 in einem symmetrischen Abstand von den Führungsnuten 10b tangiert werden.

Insgesamt verfügt die Grundplatte 13 im Beispiel über sechs senkrecht und zwölf diagonal (davon sechs links und sechs rechtsweisend) verlaufende Führungsnuten 10b. Die Führungsnuten kreuzen sich in einem symmetrischen Muster und sind wie ein Sechseck um die Öffnungen 14 angeordnet.

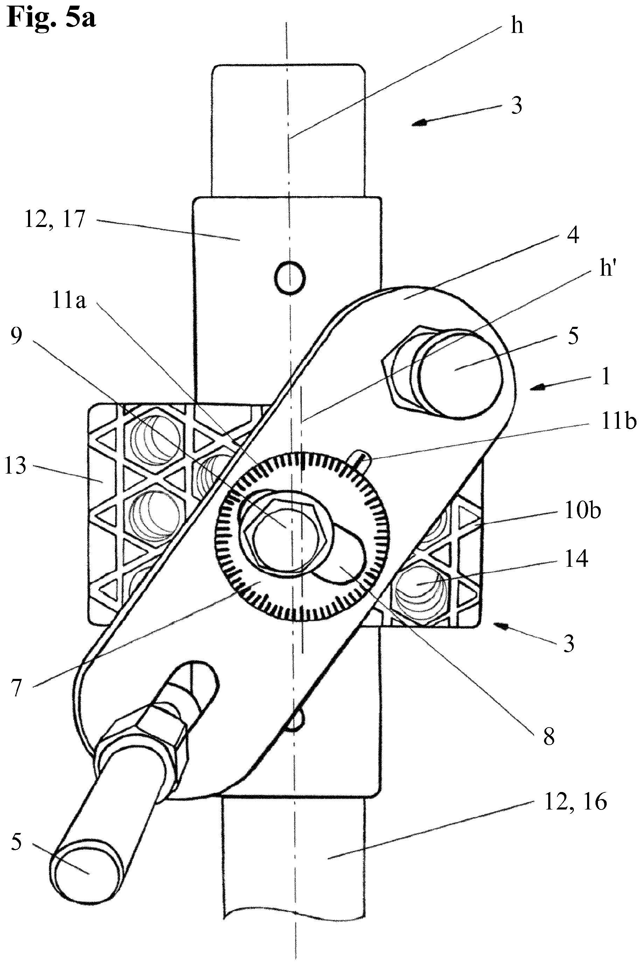

Fig. 5a zeigt die erfindungsgemäße Vorrichtung zum Aufständern eines Zweirades 2 (hier Motorrad - nicht dargestellt) mit dem angeschlossenem erfindungsgemäßen Adapter 1 für eine Verwendung der Aufständervorrichtung an der linken Seite des Motorrads (in Fahrtrichtung des Motorrades links). Der Adapter 1 ist mittels eines Gewindebolzens als Befestigungsmittels 9, der durch den Durchgang 8 des Halteteils 7 durchführbar ist und in eine der Öffnungen 14 der Grundplatte 13 einschraubbar ist, lösbar mit der Grundplatte 13 verbunden.

Das Halteteil 7 wie die Adapterplatte 4 sind mittels des Gewindebolzens 9 an der Grundplatte 13 drehfest fixiert, d. h., die gewählte Drehstellung des Halteteils 7 gegenüber der Grundplatte 13 wie die der Adapterplatte 4 gegenüber dem Halteteil 7 lässt sich bei angezogenem Gewindebolzen 9 nicht verstellen.

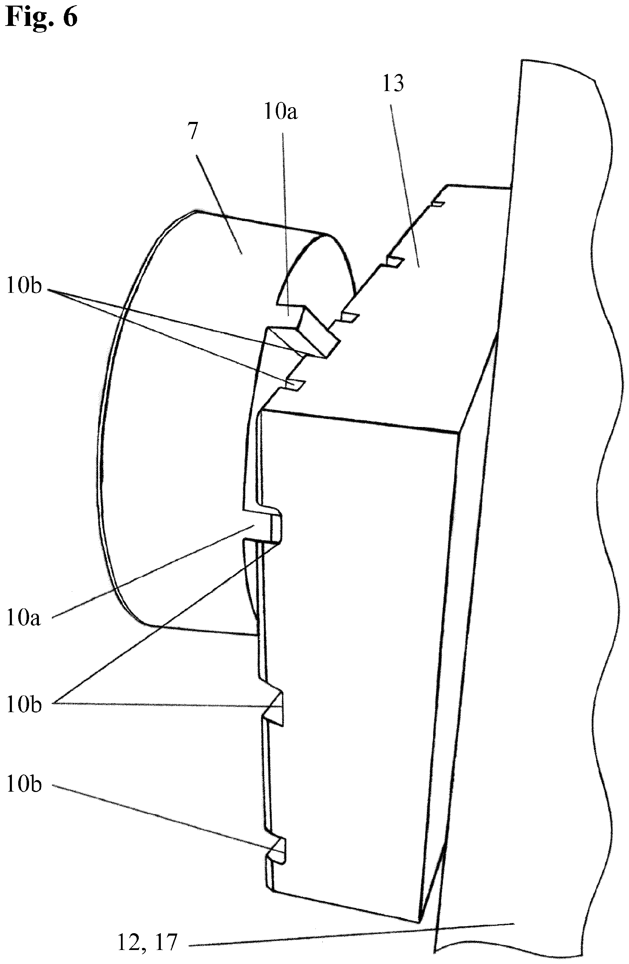

In dem gezeigten Zusammenbauzustand sind die zu Fig. 2a, b beschriebenen Führungsstege 10a des Halteteils 7 in den Führungsnuten 10b der Grundplatte 13 angeordnet (gut ersichtlich in Fig. 6).

Fig. 6 zeigt zur besseren Darstellung der Wirkungsweise der Führungselemente 10a, 10b eine Detaildarstellung der Aufständervorrichtung 3 mit dem an der Grundplatte 13 angeordneten Halteteil 7 ohne die zugehörige Adapterplatte 4.

Das Zusammenwirken der Führungsstege 10a und der Führungsnuten 10b der Grundplatte 13 ermöglichen zum einen eine Verdrehsicherung des Halteteils 7 und zum anderen eine geführte Verschiebung des Halteteils 7 und damit des Adapters 1 gegenüber der Grundplatte 13 entlang der durch die Führungsnuten 10b der Grundplatte 13 definierten Bahnen.

Das Langloch des Durchgangs 8 im Halteteil 7 hat mindestens eine Länge entsprechend dem größten Abstand zwischen den Außenkanten zweier Öffnungen 14 der Grundplatte 13. Der Adapter 1, der mittels des Halteteils 7 entlang der verschiedenen Führungsnuten 10b an der Grundplatte 13 verschoben werden kann, wird durch den Gewindebolzen 9, welcher durch das Langloch des Durchgangs 8 hindurch in einer der Öffnungen 14 platziert ist, an der Grundplatte 13 verschiebbar fixiert, so dass durch das maßlich passende Langloch wahlweise auch eine der beiden benachbarten Öffnungen 14 frei zugänglich werden kann. Da im Weiteren der Gewindebolzen 9 bei Bedarf leicht von Öffnung 14 zu Öffnung 14 versetzt werden kann, können somit alle Stellungen des Adapters 1 zwischen zwei Öffnungen 14 der Grundplatte 13 erreicht werden.

Für eine Verwendung der Aufständervorrichtung an beispielsweise der linken Seite des Zweirads gemäß Fig. 5a wird die Adapterplatte 4 mit dem Halteteil 7 in gewünschter Position an der Grundplatte 13 angeordnet und eine gewünschte Drehstellung der Adapterplatte 4 gegenüber dem Halteteil 7 entsprechend den Anforderungen für die passende Aufnahme des hier beschriebenen Motorrades voreingestellt und mit dem Schraubbolzen 9 der Durchgang 8 und die zugehörige, zugängliche Öffnung 14 belegt. Mit Einschrauben und Anziehen des Schraubbolzens 9 wird das konische Halteteil in der konischen Durchführung 6 der Adapterplatte 4 verpresst und nachfolgend der gesamte Adapter 1 mit dem voreingestellten Neigungswinkel der Adapterplatte 4 - wie in Fig. 5a ersichtlich - drehfest an die Grundplatte 13 angepresst und steht für die nachfolgende sichere Aufnahme und Aufständerung des Motorrades 2 zur Verfügung.

Mittels des Langloches im Durchgang 8 des Halteteils 7 und der korrespondierenden Führungsnuten am Halteteil 7 und an der Grundplatte 13 kann die gewünschte Position des Adapters 1 an der Grundplatte 13 stufenlos und sehr genau eingestellt werden.

Die geneigte Stellung der Adapterplatte 4 kann nun nominal bestimmt werden, indem die sich aus der Stellung ergebende Gradzahl ausgehend vom senkrechten Teilstrich der Gradeinteilung 11a am Halteteil 7 bis zur Randmarke 11b der Durchführung 6 abgelesen wird (im Ausführungsbeispiel: 6 kleine Teilstriche bzw. 30° nach rechts). Der senkrechte Teilstrich der Gradeinteilung 11a am Halteteil 7 ist im Wesentlichen parallel zur vertikalen Längs-Achse h des Standrohres 16 orientiert (siehe Parallele h').

Die Stellung bzw. der Neigungswinkel der Adapterplatte 4 ist mit Hilfe der Randmarke 11b an der Durchführung 6 und der Gradeinteilung am äußeren Rand des Halteteils 7 genau bestimmt und kann für eine erneute Montage des Motorrades 2 an der Aufständervorrichtung 3 registriert werden, um die Einstellungen schnell und komfortabel wieder bereitstellen zu können.

Die Stellung der fahrzeugspezifischen Adapterplatte 4 gegenüber dem konischen Halteteil 7 kann auch durch vorgefertigtes Einstellen und Einpressen des konischen Halteteils 7 in die konische Durchführung 6 der Adapterplatte 4 für eine Wiederverwendung an demselben Motorrad 2 und an der derselben Seite des Motorrads 2 "konserviert" werden, wodurch die wiederholte Einstellung der Drehstellung entbehrlich wird.

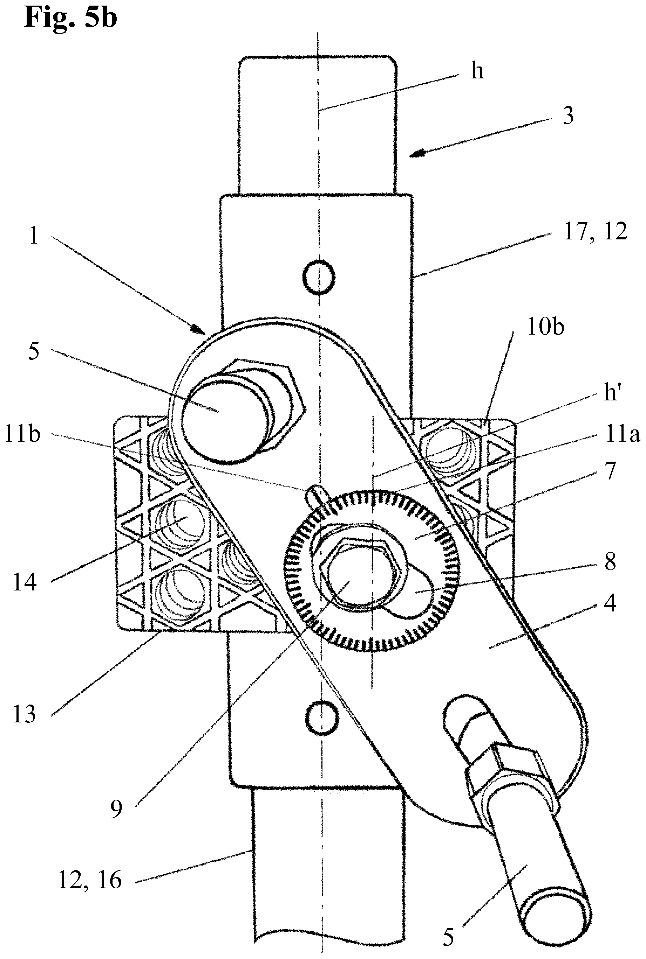

Für eine Montage der Aufständervorrichtung an der rechten Seite desselben Motorades ist der Adapter 1 wie in Fig. 5b ersichtlich an der Grundplatte 13 anzuordnen. Hierzu wird der Adapter nach Fig. 5a gelockert, in dem der Schraubbolzen 9 etwas aus der Öffnung 14 und dem Halteteil 7 herausgedreht wird, damit sich das konische Halteteil 7 gegenüber der Durchführung 6 lockert und sich die Adapterplatte 4 leicht gegenüber dem Halteteil 7 drehen lässt. Das Halteteil 7 kann in seiner Position und Drehstellung gegenüber der Grundplatte 13 verbleiben oder versetzt werden.

Die Adapterplatte 4 wird um die gleiche, jedoch negative Anzahl derjenigen Teilstriche, die sich bei der Verwendung des Adapters 1 für die linke Fahrzeugseite ergeben haben verdreht, indem ausgehend von dem nun senkrechten Teilstrich der Gradeinteilung 11a am Halteteil 7 die Randmarke 11b der Durchführung 6 der Adapterplatte 1 um 6 kleine Teilstriche (30°) nach links gestellt wird. Der senkrechte Teilstrich der Gradeinteilung 11a am Halteteil 7 ist derjenige, welcher im Wesentlichen parallel zur vertikalen Längs-Achse h des Standrohres 16 orientiert ist (siehe Parallele h').

Nach der entsprechend gespiegelten Drehung der Adapterplatte 4 gegenüber dem Halteteil 7 wird der Schraubbolzen wieder fest gezogen und damit das Halteteil 7 und die Adapterplatte 4 wieder fest an die Grundplatte 13 angepresst.

Gegebenenfalls kann auch das Halteteil 7 in eine gespiegelte Stellung verbracht werden, um auch bei einer dezentralen Anordnung des Adapters 1 an der Grundplatte 13 schnell zu exakte Einstellungen für die wechselseitige Montage der Aufständervorrichtung 3 an der linken bzw. rechten Fahrzeugseite zu gelangen.

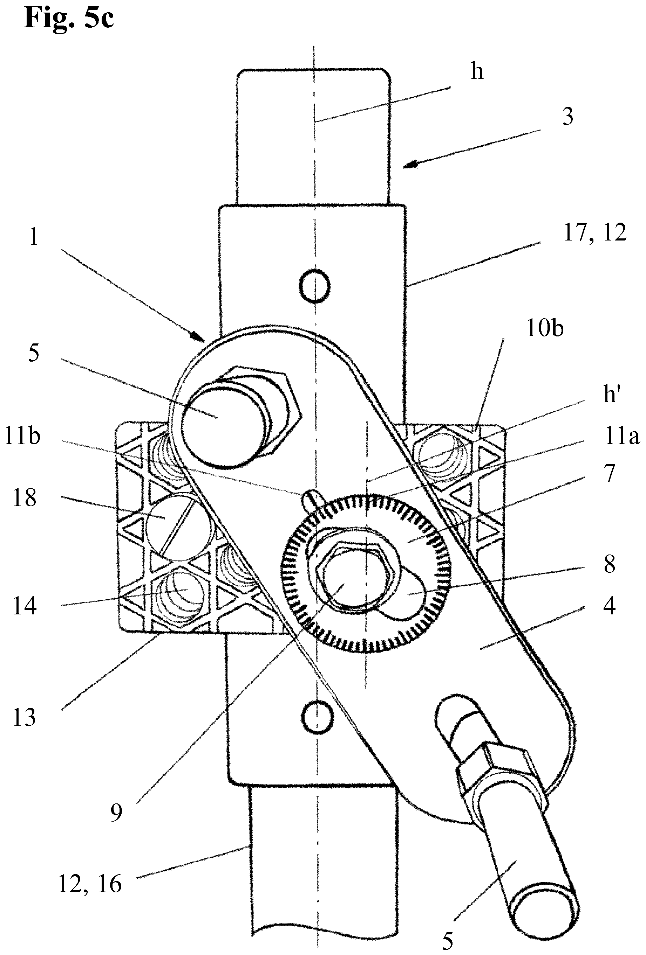

Fig. 5c zeigt eine Variante der Ausführung des an der Grundplatte 13 angeordneten Adapters 1 nach Fig. 5b, die analog auch bei der Ausführung des Adapters 1 gemäß Fig. 5a anwendbar ist.

Der Adapter 1 weist hier eine Anschlagsicherung 18 auf, die bei Bedarf an der Grundplatte 13 anbringbar ist. Die Anschlagsicherung 18 ist beispielsweise als Steckbolzen oder als Schraubbolzen in eine beliebige Öffnung 14 der Grundplatte 13 einsteckbar bzw. einschraubbar. Im Ausführungsbeispiel ist ein Schraubbolzen 18 mit einem Schraubenkopf vorgesehen. Zur Montage kann der Schraubenkopf - wie dargestellt - einen Schlitzeingriff oder eine beliebig andere Montagehilfe, wie einen Kreuz-, Innen-Sechskant oder Außensechskant aufweisen.

Ein über die Grundplatte 13 überstehende Teil des Schraubbolzens 18 dient als Anschlag zur Blockierung einer eventuellen Drehbewegung der Adapterplatte 4, um die Verdrehfestigkeit der Adapterplatte 4 zusätzlich zu deren verdrehfesten Sicherung durch das Halteteil 7 abzusichern. Dies ist gegebenenfalls relevant bei der Einwirkung überdurchschnittlich großer Hebelkräfte durch die Halterung und Aufständerung eines besonders schweren oder eines in seinem Schwerpunkt ungünstig entfernt zur vertikalen Längsachse h des Standrohres 16 der Aufständervorrichtung 3 gelagerten Zweirads.

Nach dem Einstellen der Adapterplatte 4 in der gewünschten Position und im gewünschten Neigungswinkel wird die Anschlagsicherung 18 (Schraubbolzen 18) in eine zur Adapterplatte 4 nächstgelegene, freie Öffnung 14 eingeschraubt. Günstigstenfalls liegt die Außenkontur der Adapterplatte 4 damit bereits an dem Schraubenkopf des Schraubbolzens 18 an.

Andernfalls kann die Adapterplatte 4 über die Durchführung 8 des Halteteils 7 geringfügig verschoben werden, bis die Außenkontur der Adapterplatte 4 am Schraubenkopf anliegt.

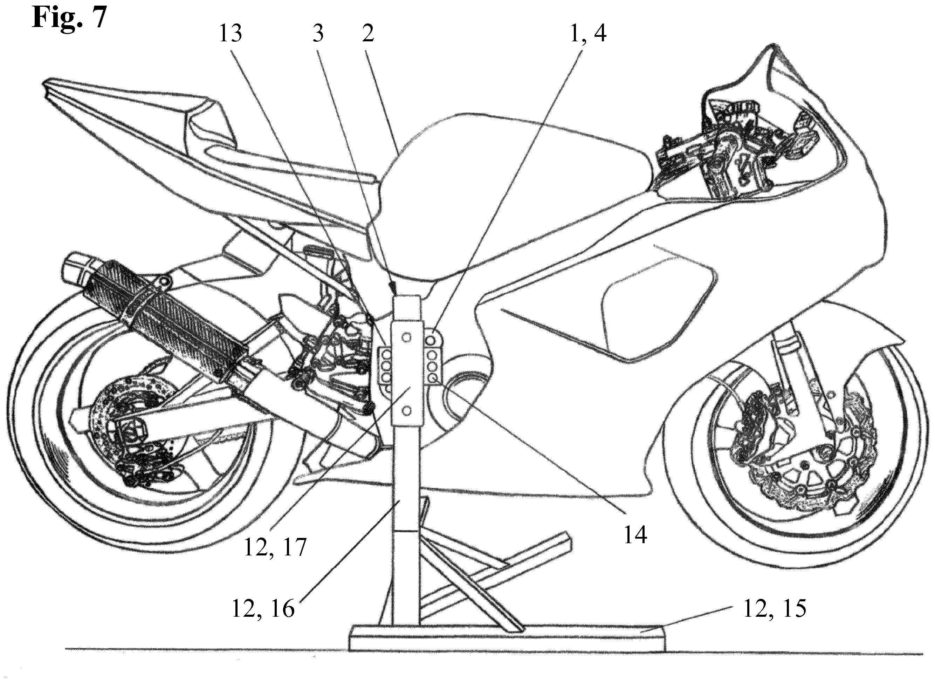

Fig. 7 zeigt schematisch ein aufgeständertes Motorrad 2, welches mittels des Adapters 1 an seiner rechten Seite an der Vorrichtung 3 zum Aufständern eines Zweirads montiert und aufgeständert ist.

Dazu wird die Aufständervorrichtung 3 rechtsseitig des Motorrads 2 so aufgestellt, dass die am Schiebeteil 17 angeordnete Grundplatte 13 bzw. der an der Grundplatte 13 angeordnete Adapter 1 dem Motorrad 2 zugewandt gerichtet ist.

Zur Gewährleistung der Standfestigkeit der Aufständervorrichtung 3 bei der Verwendung rechts des Motorrads 2 wird das Fußteil 15 gegenüber der Position am Standrohr 16 bei einer bisher üblichen linksseitigen Verwendung am Motorrad 2 um 90° versetzt, so dass das Fußteil 15 analog der Platzierung bei der Verwendung von links ebenfalls unter dem Schwerpunkt des Motorblocks des nunmehr rechtsseitig aufgeständerten Motorrades 2 platziert ist.

Zum Versetzen des Fußteils 15 wird die Steckverbindung zwischen Standrohr 16 und Fußteil 15 gelöst und um 90° versetzt wieder zusammengefügt.

Alternativ kann zur Erzielung des gleichen Effekts beim Wechsel der Seiten das Schiebeteil 17 mit dem Adapter 1 gegenüber der Position am Standrohr 16 bei bisher üblicher linksseitiger Verwendung am Motorrad 2 um 90° versetzt werden.

Dazu wird das Schiebeteil 17 vom Standrohr 16 gelöst und um 90° versetzt wieder auf das Standrohr 16 aufgeschoben und arretiert.

Nach erfolgter Aufnahme des Motorrades 2 an dem an der Grundplatte 13 der entsprechend voreingestellten Adapter 1 lässt sich das Motorrad 2 mittels einer Hubeinrichtung (nicht dargestellt), die das Schiebeteil 17 entlang des Standrohres 16 betätigt, ausheben, so dass im schwebenden Zustand die wartungsbedürftigen Fahrzeugteile insbesondere an der linken Fahrzeugseite des Motorrads 2 weitestgehend ohne Behinderung durch die Aufständervorrichtung 3 leicht und komfortabel zugänglich sind.

### Bezugszeichenliste

- 1: Adapter
- 2: Zweirad, Motorrad
- 3: Aufständervorrichtung
- 4: Adapterplatte
- 5: Einrichtung zur Aufnahme des Zweirads
- 6: Durchführung in der Adapterplatte
- 7: Halteteil
- 8: Durchgang im Halteteil
- 9: Befestigungsmittel
- 10: Führungselement, a- des Halteteils, b- der Grundplatte
- 11: Markierung, a- des Halteteils, b- der Adapterplatte
- 12: Ständer
- 13: Grundplatte
- 14: Öffnung
- 15: Fußteil
- 16: Standrohr
- 17: Schiebeteil
- 18: Anschlagsicherung

- h: vertikale (Längs-)Achse des Standrohres
- h': Parallele zur vertikalen (Längs-)Achse des Standrohres

## Patentansprüche

1. Adapter (1) zur Befestigung eines Zweirades (2) an einer Aufständervorrichtung (3), aufweisend:
- eine Adapterplatte (4) mit einer oder mehrerer Einrichtungen (5) zur Aufnahme des Zweirads (2) und mit einer Durchführung (6) und
- ein Halteteil (7) zum Anordnen in der Durchführung (6) mit einem Durchgang (8) für die Anordnung eines Befestigungsmittels (9) zur Befestigung des Halteteils (7) an der Aufständervorrichtung (3), wobei das Halteteil (7) und die Durchführung (6) der Adapterplatte (4) derart korrespondierend ausgebildet sind, dass die Adapterplatte (4) in einer Drehstellung gegenüber dem Halteteil (7) einstellbar und fixierbar ist.

2. Adapter (1) nach Anspruch 1, wobei eine Innenfläche der Durchführung (6) und eine Mantelfläche des Halteteils (7) zueinander konisch verlaufend ausgebildet sind.

3. Adapter (1) nach Anspruch 1 oder 2, wobei der Umfang der Mantelfläche des Halteteils (7) zumindest teilweise ein Übermaß gegenüber dem Umfang der Innenfläche der Durchführung (6) aufweist.

4. Adapter (1) nach einem der Ansprüche 1 bis 3, wobei das Halteteil (7) zumindest ein Führungselement (10a) zur Führung an der Aufständervorrichtung (3)aufweist, wobei vorzugsweise zwei längserstreckte Führungselemente (10a) vorgesehen sind, die parallel zueinander verlaufend angeordnet sind.

5. Adapter (1) nach einem der vorstehenden Ansprüche, wobei der Durchgang (8) des Halteteils (7) als ein Langloch ausgebildet ist.

6. Adapter (1) nach einem der vorstehenden Ansprüche, wobei eine Drehstellung der Adapterplatte (4) gegenüber dem Halteteil (7) mittels wenigstens jeweils einer an oder auf dem Halteteil (7) und an oder auf der Adapterplatte (4) angebrachten Markierung (11a, 11b) definierbar ist.

7. Vorrichtung zum Aufständern eines Zweirades (3), die Vorrichtung (3) aufweisend:
- einen Ständer (12) und
- mindestens einen Adapter (1) nach einem der Ansprüche 1 bis 8, welcher mittels eines Befestigungsmittels (9) lösbar mit dem Ständer (12) verbindbar ist.

8. Vorrichtung (3) nach Anspruch 7, wobei der Ständer (12) ein Fußteil (15) aufweist, welches mit einem Standrohr (16) lösbar verbindbar ist.

9. Vorrichtung (3) nach Anspruch 7 oder 8, wobei der Ständer (12) ein Standrohr (16) mit einem gegenüber dem Standrohr (16) verschiebbares Schiebeteil (17) aufweist.

10. Vorrichtung (3) nach Anspruch 8 oder 9, wobei das Fußteil (15) und/oder das Schiebeteil (17) in einem Winkel um die Längsachse h des Standrohrs (16) versetzt anordenbar ist.

11. Vorrichtung (3) nach einem der Ansprüche 7 bis 10, wobei der Ständer (12) eine Hubeinrichtung zur Höhenverstellung des Schiebeteils (17) aufweist, wobei die Hubeinrichtung in einem Winkel um die Längsachse h des Standrohrs (16) versetzt anordenbar ist.

12. Vorrichtung (3) nach einem der Ansprüche 7 bis 11, wobei am Ständer (12), vorzugsweise am Schiebeteil (17) des Ständers (12), eine Grundplatte (13) vorgesehen ist, die mehrere Öffnungen (14) für die Aufnahme des Befestigungsmittels (9) aufweist.

13. Vorrichtung (3) nach Anspruch 12, wobei die benachbarten Öffnungen (14) der Grundplatte (13) denselben Abstand zueinander aufweisen.

14. Vorrichtung (3) nach einem der Ansprüche 12 oder 13, wobei die Öffnungen (14) zueinander rotationssymmetrisch und/oder achsensymmetrisch in Bezug auf die Mittenachsen der Grundplatte (13) und/oder achssymmetrisch in Bezug auf eine Längsachse h des Ständers (12) angeordnet sind.

15. Vorrichtung (3) nach einem der Ansprüche 12 bis 14, wobei die Grundplatte (13) zumindest ein Führungselement (10b) zur Führung des Adapters (1), vorzugsweise des Halteteils (7), aufweist, wobei das/die Führungselement(e) (10b) der Grundplatte (13) korrespondierend zu dem/den Führungselement(en) (10a) des Adapters (1) oder des Halteteils (7), ausgebildet und angeordnet sind.

16. Vorrichtung (3) nach Anspruch 15, wobei mehrere längserstreckte Führungselemente (10b) vorgesehen sind, die parallel zueinander und in demselben Abstand zueinander verlaufend angeordnet sind.

17. Vorrichtung (3) nach Anspruch 15 oder 16, wobei das/die längserstreckte(n) Führungselement(e) (10b) in vertikaler und/oder horizontaler und/oder diagonaler Erstreckung angeordnet ist/sind.

## Claims

1. Adapter (1) for mounting a two-wheeler (2) on a stand apparatus (3), having:
- an adapter plate (4) with one or more devices (5) for receiving the two-wheeler (2) and with an opening (6) and
- a retaining part (7) for arrangement in the opening (6) with a passage (8) for the arrangement of a fastening means (9) for fastening the retaining part (7) to the stand apparatus (3), where the retaining part (7) and the opening (6) in the adapter plate (4) are designed correspondingly in such a way that the adapter plate (4) is adjustable and fixable in a rotational position relative to the retaining part (7).

2. Adapter (1) according to claim 1, where an inner surface of the opening (6) and a lateral surface of the retaining part (7) are designed conically with respect to one another.

3. Adapter (1) according to claim 1 or 2, where the circumference of the lateral surface of the retaining part (7) at least partially is oversized with respect to the circumference of the inner surface of the opening (6).

4. Adapter (1) according to one of claims 1 to 3, where the retaining part (7) has at least one guide element (10a) for guidance on the stand apparatus (3), where preferably two longitudinally extended guide elements (10a) are provided, which are arranged running parallel to one another.

5. Adapter (1) according to one of the preceding claims, where the passage (8) in the retaining part (7) is designed as an elongated hole.

6. Adapter (1) according to one of the preceding claims, where a rotational position of the adapter plate (4) relative to the retaining part (7) is definable by means of at least in each case one marking (11a, 11b) applied to or on the retaining part (7) and to or on the adapter plate (4).

7. Apparatus for mounting a two-wheeler (2), the apparatus (3) having:
- a stand (12) and
- at least one adapter (1) according to one of claims 1 to 8, which by means of a fastening means (9) is detachably connectable to the stand (12).

8. Apparatus (3) according to claim 7, where the stand (12) has a base part (15) which is detachably connectable to a stand pipe (16) .

9. Apparatus (3) according to claim 7 or 8, where the stand (12) has a stand pipe (16) with a sliding part (17) that is slidable with respect to the stand pipe (16).

10. Apparatus (3) according to claim 8 or 9, where the base part (15) and/or the sliding part (17) is arrangeable offset at an angle around the longitudinal axis h of the stand pipe (16).

11. Apparatus (3) according to one of claims 7 to 10, where the stand (12) has a lifting device for adjusting the height of the sliding part (17), where the lifting device is arrangeable offset at an angle around the longitudinal axis h of the stand pipe (16).

12. Apparatus (3) according to one of claims 7 to 11, where on the stand (12), preferably on the sliding part (17) of the stand (12), a base plate (13) is provided, which has several openings (14) for receiving the fastening means (9).

13. Apparatus (3) according to claim 12, where the adjacent openings (14) in the base plate (13) have the same spacing from each other.

14. Apparatus (3) according to one of claims 12 or 13, where the openings (14) are arranged rotationally symmetrically to one another and/or axially symmetrically in relation to the centre axes of the base plate (13) and/or axially symmetrically in relation to a longitudinal axis h of the stand (12).

15. Apparatus (3) according to one of claims 12 to 14, where the base plate (13) has at least one guide element (10b) for guiding the adapter (1), preferably the retaining part (7), where the guide element(s) (10b) of the base plate (13) are designed and arranged correspondingly to the guide element(s) (10a) of the adapter (1) or the retaining part (7).

16. Apparatus (3) according to claim 15, where several longitudinally extended guide elements (10b) are provided, which are arranged running parallel to one another and at the same spacing from one another.

17. Apparatus (3) according to claim 15 or 16, where the longitudinally extended guide element(s) (10b) are arranged in vertical and/or horizontal and/or diagonal extension.

## Revendications

1. Adaptateur (1) pour la fixation d'un deux-roues (2) sur un dispositif à la verticale (3), comprenant :
- une plaque d'adaptation (4) avec un ou plusieurs équipements (5) pour accueillir le deux-roues (2) et avec une ouverture (6) et
- un élément de support (7) à disposer dans l'ouverture (6) avec un passage (8) pour la disposition d'une fixation (9) pour l'élément de support (7) sur le dispositif à la verticale (3), l'élément de support (7) et l'ouverture (6) de la plaque d'adaptation (4) étant conçus de telle manière que la plaque d'adaptation (4) est réglable et fixable par rotation sur le support (7).

2. Adaptateur (1) selon la revendication 1, **caractérisé en ce qu'**une surface interne de l'ouverture (6) et une surface de l'enveloppe de l'élément de support (7) sont disposées de manière conique entre elles.

3. Adaptateur (1) selon la revendication 1 ou 2, **caractérisé en ce que** l'étendue de la surface de l'enveloppe de l'élément de support (7) est au moins en partie surdimensionnée par rapport à l'étendue de la surface interne de l'ouverture (6).

4. Adaptateur (1) selon la revendication 1 à 3, **caractérisé en ce que** l'élément de support (7) est doté d'au moins un élément de guidage (10a) sur le dispositif à la verticale (3), deux éléments allongés (10a) étant de préférence prévus et disposés parallèlement l'un à l'autre.

5. Adaptateur (1) selon l'une des revendications ci-dessus, **caractérisé en ce que** le passage (8) de l'élément de support (7) se présente sous la forme d'un trou oblong.

6. Adaptateur (1) selon l'une des revendications ci-dessus, **caractérisé en ce qu'**une rotation de la plaque d'adaptation (4) par rapport à l'élément de support (7) est définissable au moyen d'au moins une marque (11a, 11b) sur ou par dessus l'élément de support (7) et sur ou par dessus la plaque d'adaptation (4) .

7. Dispositif de maintien à la verticale d'un deux-roues, comprenant :
- une béquille (12) et
- au moins un adaptateur (1) selon l'une des revendications 1 à 8, **caractérisé en ce qu'**il peut être lié de manière non permanente à la béquille (12) au moyen d'une fixation (9).

8. Dispositif (3) selon la revendication 7, **caractérisé en ce que** la béquille (12) est dotée d'un pied (15) qui peut être lié de manière non permanente à un tube vertical (16).

9. Dispositif (3) selon la revendication 7 ou 8, **caractérisé en ce que** la béquille (12) est dotée d'un tube vertical (16) avec un élément coulissant (17) contre le tube vertical (16).

10. Dispositif (3) selon la revendication 8 ou 9, **caractérisé en ce que** le pied (15) et/ou l'élément coulissant (17) peut être disposé de manière décalée selon un angle le long de l'axe longitudinal h du tube vertical (16).

11. Dispositif (3) selon l'une des revendication 7 à 10, **caractérisé en ce que** la béquille (12) dispose d'un mécanisme de levage pour le réglage en hauteur de l'élément coulissant (17), le mécanisme de levage

12. Dispositif (3) selon l'une des revendications 7 à 11, **caractérisé en ce que**, au niveau de la béquille (12), de préférence au niveau de l'élément coulissant (17) de la béquille (12), une plaque de base (13) dotée de plusieurs ouvertures (14) pour accueillir les fixations (9) est prévue.

13. Dispositif (3) selon la revendication 12, **caractérisé en ce que** les ouvertures (14) adjacentes de la plaque de base (13) sont équidistantes.

14. Dispositif (3) selon l'une des revendications 12 ou 13, **caractérisé en ce que** les ouvertures (14) sont disposées de manière symétrique sur le plan de la rotation et/ou des axes les unes par rapport aux autres (13) et/ou de manière symétrique sur le plan des axes par rapport à un axe longitudinal h de la béquille (12).

15. Dispositif (3) selon l'une des revendications 12 à 14, **caractérisé en ce que** la plaque de base (13) dispose d'au moins un élément de guidage (10b) pour le guidage de l'adaptateur (1), de préférence l'élément de support (7), le ou les éléments de guidage (10b) de la plaque de base (13) correspondant à l'élément ou aux éléments de guidage (10a) de l'adaptateur (1) ou de l'élément de support (7).

16. Dispositif (3) selon la revendication 15, **caractérisé en ce que** plusieurs éléments de guidage (10b) allongés sont disposés de manière parallèle les uns aux autres et à équidistance.

17. Dispositif (3) selon la revendication 15 ou 16, **caractérisé en ce que** le ou les éléments de guidage (10b) allongés sont disposés à la verticale et/ou à l'horizontale et/ou en diagonale.
